Europäisches Patentamt

European Patent Office

Office européen des brevets

(19)

(11) **EP 1 313 203 A2**

(12) # EUROPEAN PATENT APPLICATION

(43) Date of publication:
**21.05.2003 Bulletin 2003/21**

(51) Int Cl.[7]: **H02M 1/12**, H02M 7/217

(21) Application number: **02257264.8**

(22) Date of filing: **18.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **20.10.2001 KR 2001064936**

(71) Applicant: **Postech Foundation
Pohang-city, Kyungsangbuk-do 790-784 (KR)**

(72) Inventor: **Kwon, Bong-Hwan
Pohang-City, Kyungsangbuk-do (KR)**

(74) Representative: **Stanley, David William
Stanleys
Intellectual Property
Kings Court
12 King Street
Leeds LS1 2HL (GB)**

(54) **Half-bridge converters**

(57)     A half-bridge converter with improved power factor has a voltage smoothing capacitor (Cd), a switching unit (330), a power factor improving unit (310) and a bridge diode unit (320) for transmitting energy to the voltage smoothing capacitor (Cd) and providing a current path to the power factor improving unit (310). The switching unit (330) has two switches (S1, S2) connected in series between the ends of the voltage smoothing capacitor (Cd). The power factor improving unit (310) feeds the voltage of a common connection point (CTRL) of the two switches (S1, S2) back to a common connection point of a pair of input capacitors (Cfl, Cf2) connected in series, so as to change input current according to the magnitude of input voltage. Conducting loss occurring in the switching unit (330) decreases and the power factor is improved.

FIG. 3

## Description

The present invention relates to half-bridge converters.

In general, a rectifier receives AC power and outputs DC power. A DC-DC converter converts a DC current to an AC current, boosts or steps down the AC current, and then rectifies the AC current. Amongst DC-DC converters, there are pulse width modulation converters, quasi-resonant converters, and multi-resonant converters.

Since electronic apparatuses can react sensitively to the ripple characteristic of a DC power voltage, studies for reducing the ripple in DC output power have been actively pursued. A condenser-input rectifying method has been used to convert AC power to DC power. In this method, a full-bridge rectifier, consisted of diodes and a condenser having a large capacitance, is included at an input side.

However, if a condenser having a large capacitance is used, the power factor of an AC input terminal can be lowered to 0.5-0.6 due to the charging current of the condenser. This is not preferable because, if the power factor is lowered, the efficiency is degraded.

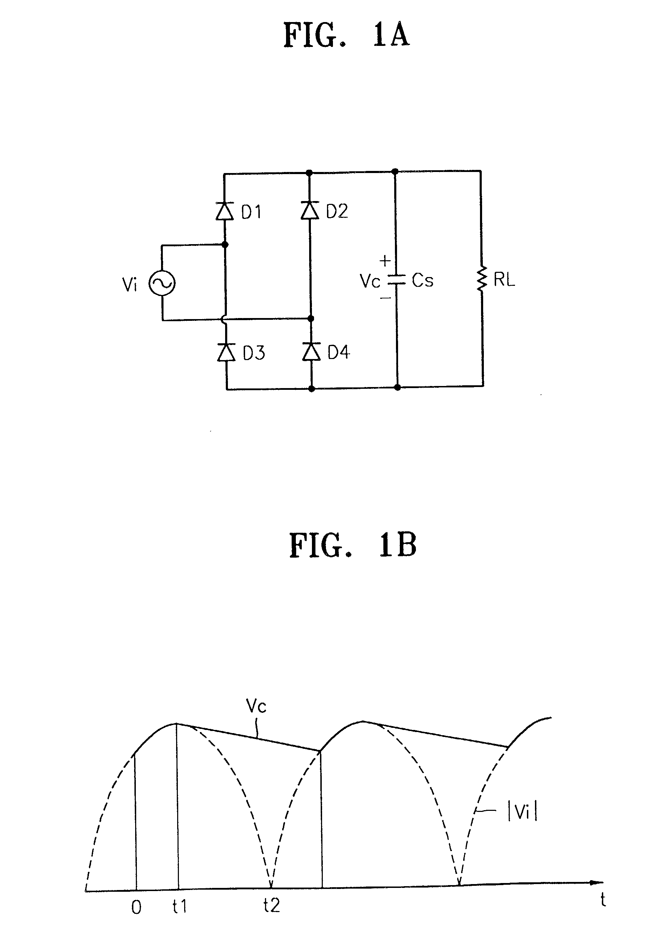

In the accompanying diagrammatic drawings, Figure 1a is a diagram showing an embodiment of a prior art converter, and Figure 1b is a waveform diagram for explaining operation of the converter.

Referring to Figure 1a, during one half cycle, diodes D1 and D4 conduct, and during the remaining half cycle, diodes D2 and D3 conduct, so the waveform of the output is as shown in Figure 1b.

In interval [0, t1] where the output voltage rises, a charging current flows because the supplied voltage is greater than the voltage (Vc) across the condenser (Cs). On the contrary, in interval [t1, t2] where the output voltage falls, the condenser discharges, and its time constant corresponds to the product of the load (RL) and the capacitance (Cs) of the condenser. The charging interval [0, t1] is much shorter than the interval [t1, t2]. Here, [a, b] represents an interval from a to b. However, due to the charging current of the condenser (Cs) which is used to reduce ripple in the output voltage, the power factor of the converter shown in Figure 1a is lowered. Also, since the input current flows only when the input voltage (Vi) is greater than the condenser voltage (Vc), the input current flows in pulse shape around the maximum value of the input voltage and therefore includes more harmonic components than a sinusoidal current.

To solve this problem, a power factor improving unit can be introduced in the input part.

In a boost converter of discontinuous-current mode which is commonly used, an input current naturally follows the sinusoidal shape of the input voltage. However, only when the output voltage of the power factor improving unit is much greater than the maximum value of an the input voltage, the power factor is improved. Meanwhile, if the output voltage of the power factor improving unit increases, voltages applied to semiconductor devices also increase. Therefore, in order to stand this voltage stress, a semiconductor switch having a higher rated voltage should be used. On the other hand, since in the semiconductor switch having a higher rated voltage the conducting resistance is also high, the conducting loss also increases. If the conducting loss increases, the efficiency of the entire system is degraded.

Therefore, it is desirable to provide a converter which reduces the conducting loss in a semiconductor device, improves the power factor of the input terminal, and thus improves the efficiency of the entire system.

Preferred embodiments of the present invention aim to provide a converter having a high power factor in which the voltage of a switching unit of the converter is fed back to the input terminal of the converter so that the conducting loss occurring in the switching unit decreases and the power factor of the input terminal is improved.

According to one aspect of the present invention, there is provided a half-bridge converter comprising:

a voltage smoothing capacitor;

a switching unit having a two switches connected in series between both ends of the voltage smoothing capacitor,

a power factor improving unit; and

a bridge diode unit arranged to transmit energy to the voltage smoothing capacitor and to provide a current path to the power factor improving unit:

wherein the power factor improving unit comprises a pair of input capacitors connected in series and is arranged to feed the voltage of a common connection point of the two switches back to a common connection point of said pair of input capacitors.

The power factor improving unit may comprise:

a feedback inductor arranged to feed the voltage of the common connection point of the switches back to the common connection point of the input capacitors; and
a coupling inductor of which a first winding is connected between one end of an input voltage means and one end of the bridge diode unit, a second winding is connected between another end of the input voltage means and another end of the bridge diode unit, and the first winding and the second winding are coupled with each other.

The power factor improving unit may comprise:

a coupling inductor of which a first winding is connected between one end of an input voltage means and one end of the bridge diode unit, a second winding is connected between another end of the input voltage means and another end of the bridge diode unit, and the first winding and the second winding are coupled with each other;

a first inductor arranged to linearly change the current between one end of the input voltage means and the first winding of the coupling inductor; and

a second inductor arranged to linearly change the current between the other end of the input voltage means and the second winding of the coupling inductor:

wherein the common connection point of the switches is connected to the common connection point of the input capacitors.

The power factor improving unit may comprise:

a feedback inductor arranged to feed the voltage of the common connection point of the switches back to the common connection point of the input capacitors.

The power factor improving unit may comprise:

a first inductor arranged to linearly change the current between one end of an input voltage means and one end of the bridge diode unit; and
a second inductor arranged to linearly change the current between another end of the input voltage means and the other end of the bridge diode unit:

wherein the common connection point of the switches is connected to the common connection point of the input capacitors.

Preferred embodiments of the present invention may accordingly have an improved power factor at the input side.

For a better understanding of the invention, and to show how embodiments of the same may be carried into effect, reference will now be made, by way of example, to Figures 2 to 9 of the accompanying diagrammatic drawings, in which:

Figure 2 is a schematic block diagram of a half-bridge converter according to one example of the present invention;

Figure 3 is a circuit diagram of a half-bridge converter being a preferred embodiment of the present invention;

Figure 4 is a waveform diagram for explaining the operation of each component of the half-bridge converter shown in Figure 3;

Figure 5 is a diagram of a first preferred embodiment of a power factor improving unit mounted in a half-bridge converter according to an example of the present invention;

Figure 6 is a diagram of a second preferred embodiment of a power factor improving unit mounted in a half-bridge converter according to an example of the present invention;

Figure 7 is a diagram of a third preferred embodiment of a power factor improving unit mounted in a half-bridge converter according to an example of the present invention;

Figure 8 is a diagram of a fourth preferred embodiment of a power factor improving unit mounted in a half-bridge converter according to an example of the present invention; and

Figure 9 is a graph showing experimental waveforms of the half-bridge converter shown in Figure 3.

In the figures, like references denote like or corresponding parts.

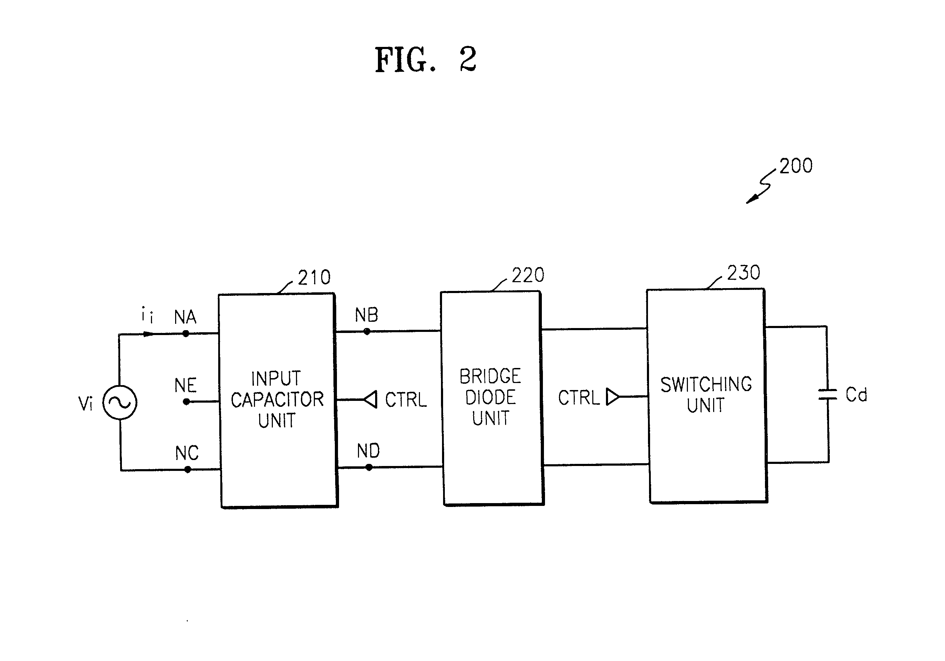

Figure 2 is a schematic block diagram of a half-bridge converter according to one example of the present invention. The half-bridge converter includes an input voltage ($v_i$), a power factor improving unit 210, a bridge diode unit 220, a switching unit 230, and a smoothing capacitor (Cd).
The bridge diode unit 220 provides a current path to the power factor improving unit 210 and transmits energy to the smoothing capacitor (Cd). The smoothing capacitor (Cd) stores the energy transmitted from the bridge diode unit 220. The switching unit 230 includes two switches serially connected to both ends of the smoothing capacitor (Cd). The power factor improving unit 210 includes two input capacitors for supplying an input voltage, and it is connected between a common connection point of switches forming the switching unit 230 and each side of the input voltage ($v_i$). The common connection point of the switches forming the switching unit (230) is fed for feedback to the common connection point of the input capacitors so that an input current ($i_i$) can be increased or decreased according to the magnitude of the input voltage ($v_i$).
The switching unit 230 is complementarily turned on according to a duty cycle, and may include two switches serially connected to each other. By this duty cycle, the output power of the half-bridge converter 200 shown in Figure 2 is adjusted. In addition, the switches forming the switching unit 230 perform a single-stage power control function for controlling output power and at the same time improving the power factor of the input terminal. A variety of preferred embodiments of the power factor improving unit 210 will now be explained in detail, referring to the drawings.

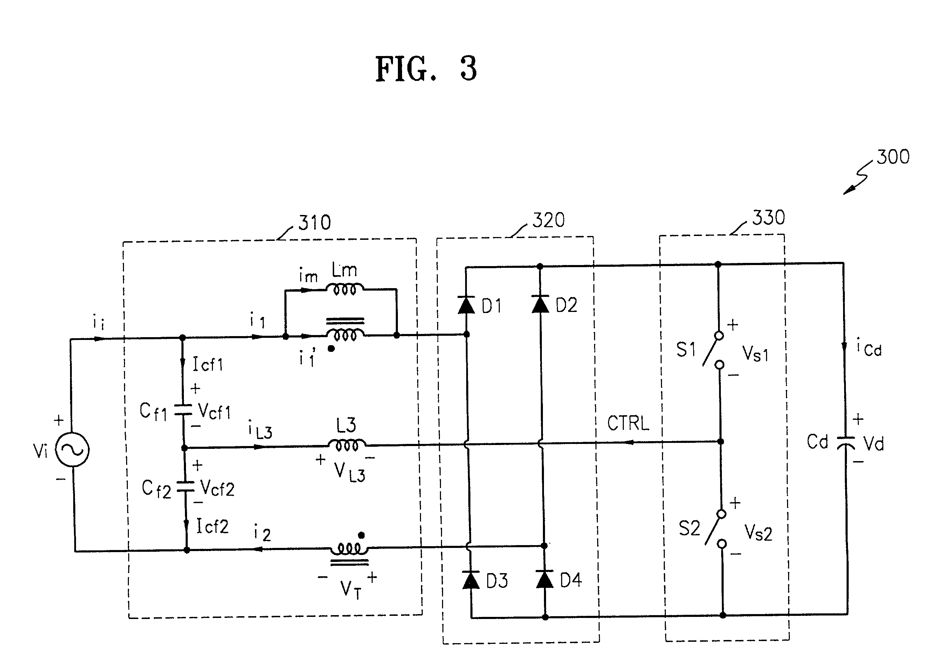

Figure 3 is a circuit diagram of a preferred embodiment of the present invention.

The half-bridge converter 300 shown in Figure 3 includes an input voltage ($v_i$), a power factor improving unit 310, a bridge diode unit 320, a switching unit 330, and a smoothing capacitor (Cd). The bridge diode unit 320 includes four diodes D1 through D4 which are connected in the form of a full bridge. The switching unit 330 includes first and second switches S1 and S2 which are serially connected to both ends of the smoothing capacitor (Cd). The power factor improving unit 310 includes two input capacitors ($C_{f1}$, $C_{f2}$) for supplying the input voltage ($v_i$) and performing smoothing operations; a feedback inductor (L3) for feeding the voltage of the common connection point of the switches (S1, S2) back to the common connection point of the two input capacitors ($C_{f1}$, $C_{f2}$); and a coupling inductor (T1) in which a first winding is connected between one end of the input voltage ($v_i$) and one end of the bridge diode unit 320, a second winding is connected between the other end of the input voltage ($v_i$) and the other end of the bridge diode unit 320, and the first winding and the second winding are coupled with each other. For convenience of explanation, it is assumed that the magnetizing inductance Lm of the coupling inductor (T1) is high enough for a stable flow of a current, and the turns ratio between the first winding and the second winding is 1:1. However, this modelling is just for convenience of explanation on the operation of a device and not for limiting the scope of the present invention.

The operation of the half-bridge converter 300 shown in Figure 3 will now be explained in detail.

First, it is assumed that the first switch (S1) is turned on. Then, the first diode (D1) is turned on and a constant current flowing through the first winding and the second winding of the coupling inductor (T1) begins to decrease. In this case, since both the first diode (D1) and the fourth diode (D4) conduct, the voltage ($v_T$) between both ends of the coupling inductor (T1) is constant and the size of the voltage ($v_{L3}$) applied to both ends of the feedback inductor (L3) is kept constant. Therefore, the current flowing through the first winding and the second winding of the coupling inductor (T1) and the current flowing through the feedback inductor (L3) change linearly. If the current flowing through the first winding and the second winding decrease down to '0', the fourth diode (D4) is turned off, and the constant current flowing through the magnetizing inductance (Lm) of the coupling inductor (T1) all flows through the feedback inductor (L3). In this process, the input current ($i_i$) supplied from the input voltage ($v_i$) is always 0.5 times the constant current flowing through the magnetizing inductance (Lm), and the constant current flowing through the magnetizing inductance (Lm) is in proportion to the input voltage. Therefore, the input current ($i_i$) increases or decrease with respect to changes of the input voltage ($v_i$).

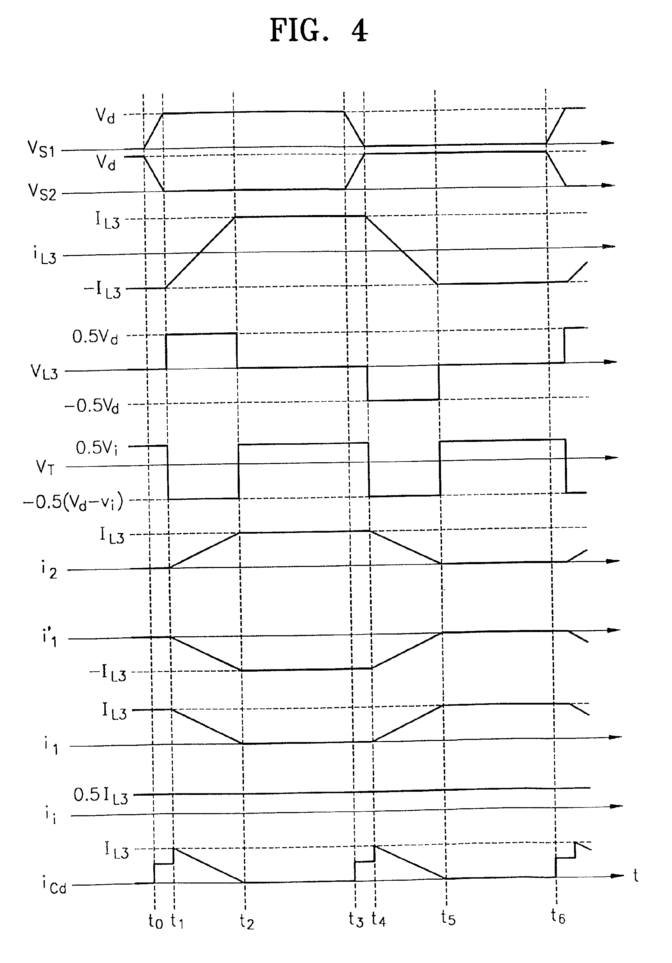

Figure 4 is a waveform diagram for explaining the operation of each component of the half-bridge converter shown in Figure 3

First, it is assumed that before time $t_0$, the first switch (S1) is turned on and the second switch (S2) is turned off. Now, the first switch (S1) begins to be turned off at time $t_0$ and continues to be turned off until time $t_1$. Therefore, the voltage ($v_{S1}$) of the first switch (S1) increases from '0' to the voltage (Vd) of the smoothing capacitor (Cd). Meanwhile, the voltage ($v_{S2}$) of the second switch (S2) decreases from the voltage (Vd) to '0'. Before time $t_0$, the current ($i_{L3}$) flowing through the feedback inductor (L3) is the minimum value - $I_{L3}$, and from $t_1$ to $t_2$, linearly increases to the maximum value + $I_{L3}$. After time $t_2$, all the constant current flowing through the magnetizing inductance (Lm) of the coupling inductor (T1) flows to the feedback inductor (L3) and the voltage of the feedback inductor (L3) becomes '0'. The reason why the current ($i_{L3}$) flowing through the feedback inductor (L3) changes to be linear is that the voltage of the coupling inductor (T1) is constant and the voltage of the feedback inductor (L3) is also constant, as described above.

The voltage ($v_T$) between both ends of the second winding of the coupling inductor (T1) at [$t_1$, $t_2$] is obtained as follows. First, since the first switch (S1) is turned on and the second switch (S2) is turned off before time $t_0$, if Kirchoff's Voltage Law (KVL) is applied to the first input capacitor ($C_{f1}$), the coupling inductor (T1) and the feedback inductor (L3), the following equation 1 is obtained:

$$v_T = v_{Cf\,1} + v_{L3} \qquad (1)$$

For convenience of explanation, the voltage drop of the first diode (D1) is neglected, but this does not limit the scope of the present invention. Meanwhile, if it is assumed that the voltage ($v_{L3}$) of the feedback inductor (L3) is '0' and the capacities of the input capacitors ($C_{f1}$, $C_{f2}$) are the same before time $t_1$, $v_T$ has a constant value of 0.5 $v_i$. If a switching operation is performed and arrives at time $t_2$, the first switch (S1) is turned off, the second switch (S2) is turned on, and the first diode (D1) and the fourth diode (D4) are turned on. Therefore, if KVL is applied to the input voltage source ($v_i$), the coupling inductor (T1) and the smoothing capacitor ($V_d$), then the following equation 2 is obtained:

$$v_T = -0.5(V_d - v_i) \qquad (2)$$

That is, $v_T$ has a constant value of -0.5($V_d$- $v_T$). At this time, the voltage ($v_{L3}$) of the feedback inductor (L3) satisfies the following equation 3:

$$v_{L3} = v_{Cf2} - v_T \qquad (3)$$

At this time, since the voltage ($v_{Cf2}$) of the second input capacitor ($C_{f2}$) is 0.5 $v_i$, and $v_T$ is -0.5($V_d$ - $v_i$), the voltage ($v_{L3}$)of the feedback inductor (L3) has a constant value of 0.5 $V_d$. Therefore, the slope of the current ($i_{L3}$) flowing through the feedback inductor (L3) at [$t_1$, $t_2$] is 0.5 $V_d$ /L3.

Also, the relation between the current ($i_{L3}$) flowing through the feedback inductor (L3) and the current ($i_2$) flowing through the coupling inductor (T1) is as the following equation 4:

$$i_2 = i_{L3} + i_1' + i_m \qquad (4)$$

Therefore, the current ($i_2$) at [$t_1$, $t_2$] constantly increases and arrives at the maximum value of the current ($i_{L3}$) flowing through the feedback inductor (L3). Meanwhile, since the changing current ($i_2$) is the reverse phase of the current ($i_1'$) flowing through the first winding of the coupling inductor (T1) and the current ($i_m$) flowing through the magnetizing inductance (Lm) has a constant value of (+ $I_{L3}$), $i_1$ is obtained by the following equation 5:

$$i_1 = i_m + i_1' \qquad (5)$$

Also, because of the symmetry of the input capacitors, the current flowing through the first input capacitor ($C_{f1}$) satisfies the following equation 6:

$$i_{Cf1} = \frac{1}{2}i_{L3} \qquad (6)$$

In addition, since $i_i = i_1 + i_{Cf1}$, the current ($i_i$) supplied by the input voltage source has a constant value of 0.5 $I_{L3}$.

In conclusion, the value of the current ($i_i$) is constant in the entire intervals of the switching period, and since the waveform of the input current ($i_i$) changes with respect to the input voltage ($v_i$), the power factor improves.

The power factor improving unit 310 of the circuit shown in Figure 3 does not limit the scope of the present invention. Rather, it is possible to build a structure in which the voltage of the common connection point of the switches forming the switching unit is fed back to the common connection point of the input capacitors so that the input current ($i_i$) changes with respect to the input voltage ($v_i$). Therefore, a variety of preferred embodiments of the power factor improving unit 310 of the present invention will now be explained.

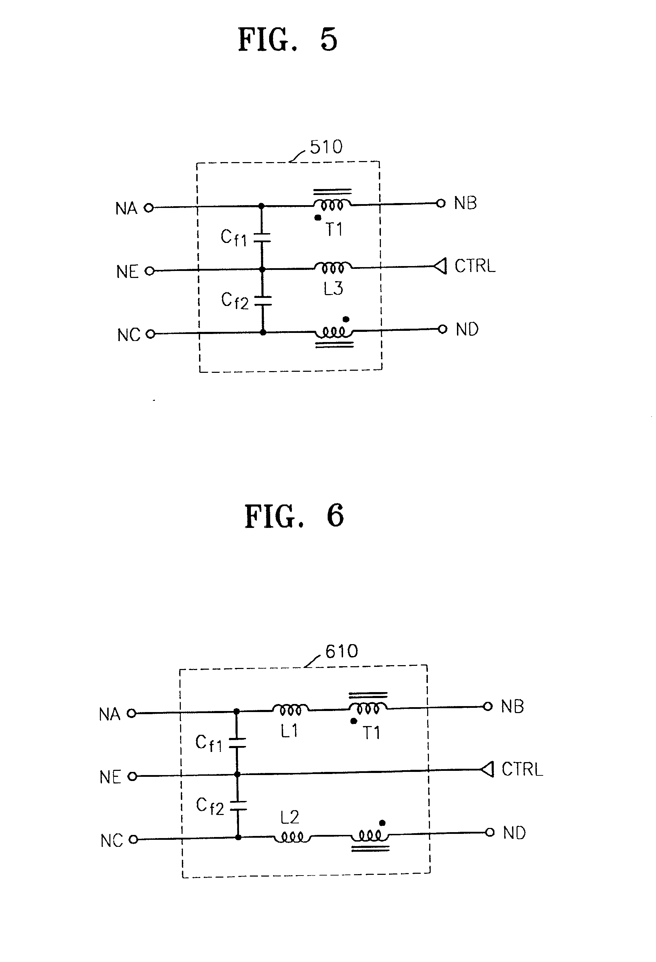

Figure 5 is a diagram of a first preferred embodiment of a power factor improving unit mounted in a half-bridge converter according to one example of the present invention.

The power factor improving unit 510 of Figure 5 includes a coupling inductor (T1) in which the first winding is connected between one end (NA) of the input voltage (not shown) and one end (NB) of the bridge diode unit (not shown), the second winding is connected between the other end (NC) of the input voltage and the other end (ND) of the bridge diode unit, and the first winding and the second winding are coupled each other. The power factor improving unit 510 also includes a feedback inductor (L3) which feeds the common connection point (CTRL) of the switching unit to the common connection point (NE) of the input capacitors.

The operation of the power factor improving unit 510 of Figure 5 is shown in Figure 4.

Figure 6 is a diagram of a second preferred embodiment of a power factor improving unit mounted in a half-bridge converter according to one example of the present invention.

The power factor improving unit 610 of Figure 6 includes a coupling inductor (T1), in which the first winding is connected between one end (NA) of the input voltage (not shown) and one end (NB) of the bridge diode unit (not shown), the second winding is connected between the other end (NC) of the input voltage and the other end (ND) of the bridge diode unit, and the first winding and the second winding are coupled with each other, a first inductor (L1) for linearly changing the current between one end (NA) of the input voltage and the first winding of the coupling inductor, and a second inductor (L2) for linearly changing the current between the other end (NB) of the input voltage and the second winding of the coupling inductor. The common connection point (CTRL) of the switching unit is connected to the common connection point (NE) of the input capacitors.

The operation of the power factor improving unit 610 of Figure 6 is similar to that of the power factor improving unit 310 of Figure 3, except that the voltage which is constantly applied to the feedback inductor (L3) of the power factor improving unit 310 of Figure 3 is applied to the first and second inductors (L1, L2). Therefore, for simplification, further explanation of the operation of the power factor improving unit 610 will be omitted.

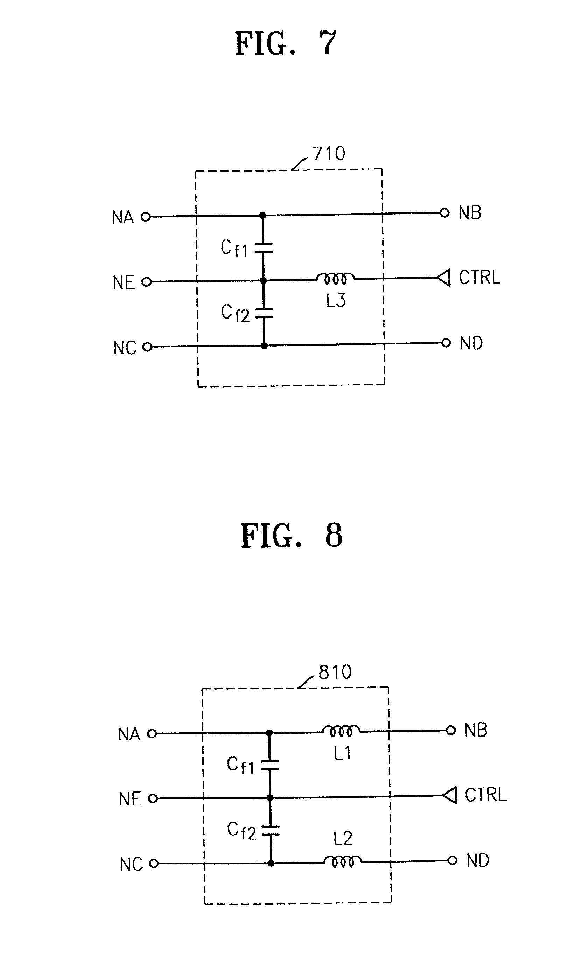

Figure 7 is a diagram of a third preferred embodiment of a power factor improving unit mounted in a half-bridge converter according to one example of the present invention.

The power factor improving unit 710 of Figure 7 includes a feedback inductor (L3) for feeding the common connection point (CTRL) of the switching unit to the common connection point (NE) of the input capacitors.

The operation of the power factor improving unit 710 of Figure 7 is similar to that of the power factor improving unit 610 of Figure 6, except that the first and second inductors (L1, L2) for linearly changing the current of the power factor improving unit 610 of Figure 6 is replaced by the feedback inductor (L3) in the power factor improving unit 710 of Figure 7. Therefore, for simplification, further explanation of the operation of the power factor improving unit 710 will be omitted.

Figure 8 is a diagram of a fourth preferred embodiment of a power factor improving unit mounted in a half-bridge converter according to one example of the present invention.

The power factor improving unit 810 of Figure 8 includes a first inductor (L1) for linearly changing the current between one end (NA) of the input voltage (not shown) and one end (NB) of the bridge diode unit, and a second inductor (L2) for linearly changing the current between the other end (NC) of the input voltage and the other end (ND) of the bridge diode unit. The voltage of the common connection point (CTRL) of the switching unit is fed back to the common connection point (NE) of the input capacitors.

The operation of the power factor improving unit 810 shown in Figure 8 is similar to that of the power factor improving unit 610 of Figure 6. In the power factor improving unit 810 of Figure 8, the first and second inductors (L1, L2) also linearly change the current. Therefore, for simplification, further explanation of the operation of the power factor improving unit 810 will be omitted.

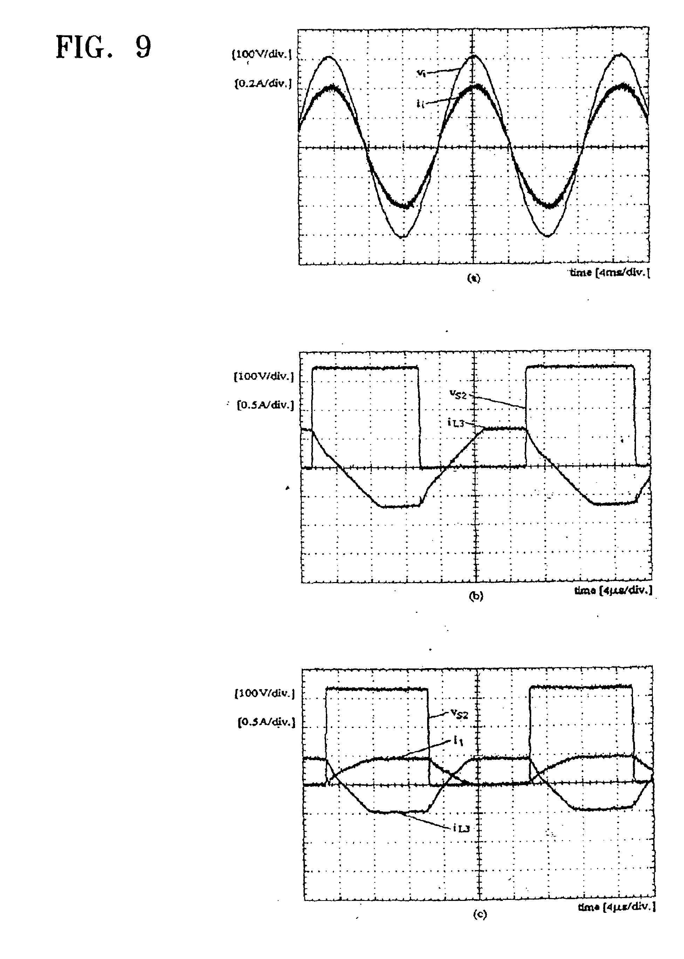

Figure 9 is a graph for showing experimental waveforms of the half-bridge converter shown in Figure 3. As shown in Figure 9, since the input current practically follows the waveform of the input voltage, the power factor measured by the experiment is greater than 0.99.

So far, optimum embodiments are explained in the drawings and specification, and though specific terminologies are used here, these have been used only to explain examples of the present invention. For example, a switching unit is described above as having two switches serially connected and complementarily turned on and off. However, for preferable operation of the switches, semiconductor devices such as a Metal Oxide Semiconductor Field Effect Transistor (MOSFET) may be employed as a switching device. Also, an Insulated Gate Bipolar Transistor (IGBT) having a lower loss rate, and higher voltage and current rating may be employed as a switch. Therefore, the present invention is not restricted to the above-described embodiments and many variations are possible.

According to preferred embodiments of the present invention, there is provided a converter having a high power factor, in which by feeding the voltage of a switching unit back to an input terminal, a device having a low voltage and current rating is used as a switching device so that conducting loss occurring in the switching unit decreases and the power factor of the input terminal is improved.

In this specification, the verb "comprise" has its normal dictionary meaning, to denote non-exclusive inclusion. That is, use of the word "comprise" (or any of its derivatives) to include one feature or more, does not exclude the possibility of also including further features.

The reader's attention is directed to all and any priority documents identified in connection with this application and to all and any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A half-bridge converter comprising:

   a voltage smoothing capacitor (Cd);

   a switching unit (330) having two switches (S1, S2) connected in series between both ends of the voltage smoothing capacitor (Cd);

   a power factor improving unit (310); and

   a bridge diode unit (320) arranged to transmit energy to the voltage smoothing capacitor (Cd) and to provide a current path to the power factor improving unit (310):

   wherein the power factor improving unit (310) comprises a pair of input capacitors ($C_{f1}$, $C_{f2}$) connected in series and is arranged to feed the voltage of a common connection point (CTRL) of the two switches (S1, S2) back to a common connection point (NE) of said pair of input capacitors

($C_{f1}$, $C_{f2}$).

2. A half-bridge converter according to claim 1, wherein the power factor improving unit (510) comprises:

a feedback inductor (L3) arranged to feed the voltage of the common connection point (CTRL) of the switches (S1, S2) back to the common connection point (NE) of the input capacitors ($C_{f1}$, $C_{f2}$); and

a coupling inductor (T1) of which a first winding is connected between one end (NA) of an input voltage means and one end (NB) of the bridge diode unit, a second winding is connected between another end (NC) of the input voltage means and another end (ND) of the bridge diode unit, and the first winding and the second winding are coupled with each other.

3. A half-bridge converter according to claim 1, wherein the power factor improving unit (310) comprises:

a coupling inductor (T1) of which a first winding is connected between one end (NA) of an input voltage means and one end (NB) of the bridge diode unit, a second winding is connected between another end (NC) of the input voltage means and another end (ND) of the bridge diode unit, and the first winding and the second winding are coupled with each other;

a first inductor (L1) arranged to linearly change the current between one end (NA) of the input voltage means and the first winding of the coupling inductor (T1); and

a second inductor (L2) arranged to linearly change the current between the other end (NC) of the input voltage means and the second winding of the coupling inductor:

wherein the common connection point (CTRL) of the switches (S1, S2) is connected to the common connection point (NE) of the input capacitors ($C_{f1}$, $C_{f2}$).

4. A half-bridge converter according to claim 1, wherein the power factor improving unit (310) comprises:

a feedback inductor (L3) arranged to feed the voltage of the common connection point (CTRL) of the switches (S1, S2) back to the common connection point (NE) of the input capacitors ($C_{f1}$, $C_{f2}$).

5. A half-bridge converter according to claim 1, wherein the power factor improving unit (310) comprises:

a first inductor (L1) arranged to linearly change the current between one end (NA) of an input voltage means and one end (NB) of the bridge diode unit; and

a second inductor (L2) arranged to linearly change the current between another end (NC) of the input voltage means and the other end (ND) of the bridge diode unit:

wherein the common connection point (CTRL) of the switches (S1, S2) is connected to the common connection point (NE) of the input capacitors ($C_{f1}$, $C_{f2}$).

# FIG. 1A

# FIG. 1B

FIG. 2

200

210 INPUT CAPACITOR UNIT

220 BRIDGE DIODE UNIT

230 SWITCHING UNIT

Cd

CTRL

NA

NE

NC

NB

ND

Vi

ii

# FIG. 3

EP 1 313 203 A2

EP 1 313 203 A2

# FIG. 4

# FIG. 5

# FIG. 6

# FIG. 7

# FIG. 8

FIG. 9

(a)  time [4ms/div.]

[100V/div.]
[0.2A/div.]
$v_i$
$i_i$

(b)  time [4µs/div.]

[100V/div.]
[0.5A/div.]
$v_{S2}$
$i_{L3}$

(c)  time [4µs/div.]

[100V/div.]
[0.5A/div.]
$v_{S2}$
$i_1$
$i_{L3}$